# EUROPEAN PATENT SPECIFICATION

(11) **EP 1 701 865 B1**
(45) Date of publication and mention of the grant of the patent: **03.03.2010**
(21) Application number: 05700751.0
(22) Date of filing: 07.01.2005
(51) Int. Cl.: B60Q 3/02

(54) **A COMBINED VENTILATING AND ILLUMINATING ARRANGEMENT FOR A PUBLIC TRANSPORT VEHICLE**
KOMBINIERTE VENTILATIONS- UND BELEUCHTUNGSANORDNUNG FÜR EIN ÖFFENTLICHES VERKEHRSMITTEL
AGENCEMENT COMBINE DE VENTILATION ET D'ECLAIRAGE POUR UN VEHICULE DE TRANSPORT PUBLIC

(30) Priority: 09.01.2004 GB 0400422
(43) Date of publication of application: 20.09.2006
(73) Proprietor: Bombardier Transportation GmbH, 10785 Berlin (DE)
(72) Inventor: VANBERTEN, Phillipe, F-59990 Preseau (FR)
(74) Representative: Broydé, Marc
(86) International application number: PCT/EP2005/000100
(87) International publication number: WO 2005/068255

(56) References cited:
- EP-A- 0 894 668
- DE-A1- 2 659 683
- DE-A1- 19 847 884
- DE-U1- 20 203 007
- GB-A- 2 047 871
- US-A- 5 921 670
- US-A1- 2003 048 641

## Description

The invention relates to the lighting arrangement for illuminating the interior space of a public transport vehicle and, more specifically, to an arrangement combining lighting with an air diffusion system, e.g. a ventilating, cooling or air conditioning system for the interior space of the vehicle.

Such an arrangement is known from US 2 902 917.

The passenger compartments of public transport vehicles are conventionally lit by means of fluorescent tubes or, more recently, halogen lamps. These systems are not without disadvantages, such as their short life span, high power requirements and poor luminous efficacy. Recent progress in light emitting diodes (LEDs) have made it possible to envisage using these light sources as an alternative to conventional lighting systems. LED lighting systems used under optimal conditions are typically low-power and have a greatly enhanced life span and lower maintenance cost.

However, the performance of LEDs, and in particular high-power LEDs, is highly dependent on their temperature. More specifically, the life span of a LED is dramatically reduced when the LED temperature reaches 70 or 80 degrees Celsius.

A device of the type described above is known from prior art document US 6 158 882 This system uses LEDs in serial for illuminating vehicle interiors. The lighting system includes a plurality of LEDs contained within a sealed lighting tube. However, this system is not directed towards a high-power LED lighting system and does not discuss the issue of heat dissipation.

The need of dissipating heat when using high power LEDs for illuminating the interior of a vehicle or building has been addressed in US2003/0048641, which suggests providing a LED lighting device with a channel case made of thermally conductive material. This solution appears to be quite expensive and bulky because of the size of the heat sink that is necessary for dissipating the heat generated by the high power LED.

There is therefore still room for improvement in order to achieve a more compact and less expensive illuminating device.

According to the present invention, there is provided a combined ventilating and illuminating arrangement for a public transport vehicle having an interior space for passengers, comprising the technical features of claim 1.

The forced air flow inside the exhaust duct is used to dissipate the heat from the heat sink by convection. It becomes possible to increase the supply of power to the light sources without reducing their life span. Also, for a given supply current, the life span of the light sources increases and their reliability is enhanced. In addition, it becomes possible to put the light sources closer to one another so as to increase light intensity.

Of course, the invention applies primarily to high-power light emitting diodes, even though it would be also applicable with the same advantages to other types of light sources, the performance of which is dependent on temperature.

According to one embodiment of the present invention, the light sources are arranged in panels, each panel comprising a plurality of light sources. Maintenance and replacement of the light sources is simple.

Preferably, the panels comprise at least a first panel comprising a first plurality of said light sources and a second panel adjacent to the first panel and comprising a second plurality of said light sources, the first plurality of said light sources and the second plurality of said light sources being connected to different electric power supply units.

Adjacent panels will not be simultaneously affected in case of failure of one power supply unit.

According to the invention, at least one of said panels has a front face facing the interior space of the vehicle and a back face provided with at least one of said heat sinks projecting inside the duct. The at least one of said panels is hinged to the duct and movable between a position of service in which the heat sinks project inside the duct and a position of maintenance in which the back face is accessible from the interior space of the vehicle. Access to the back face of the panel for maintenance purposes is particularly easy.

Preferably, the heat sinks may comprise:
- individual heat sinks, each of said individual heat sinks for conducting heat from only one of said light sources, and/or
- at least one collective heat sink for conducting heat from a plurality of said light sources.

Preferably, the air pumping unit comprises a fan.

The duct can be located in the ceiling of the vehicle, or be attached to a luggage rack of the vehicle over the seats or to the walls of the interior of the vehicle.

Other advantages and features of the invention will become more clearly apparent from the following description of a specific embodiment of the invention given as non-restrictive example only and represented in the accompanying drawings in which:
- figure 1 is a schematic view, in cross-section, of the interior of a public transport vehicle provided with a combined lighting and ventilating arrangement according to a first embodiment of the invention;
- figure 2 is a view of a detail of the ceiling of the vehicle of figure 1;
- figure 3 is a view of a detail of the arrangement of figure 1;
- figure 4 is a schematic view in longitudinal section, of the interior of the transport vehicle of figure 1.

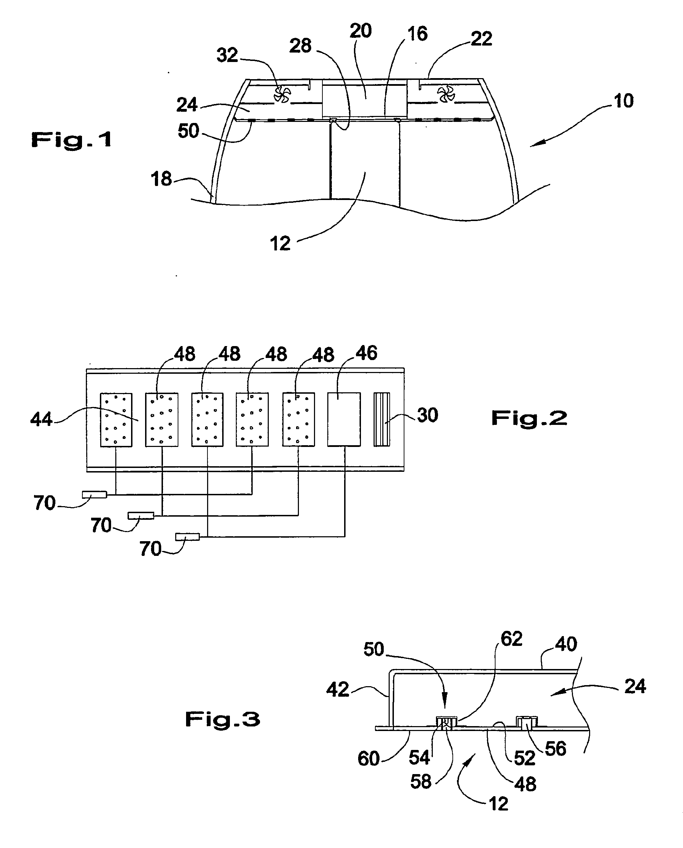

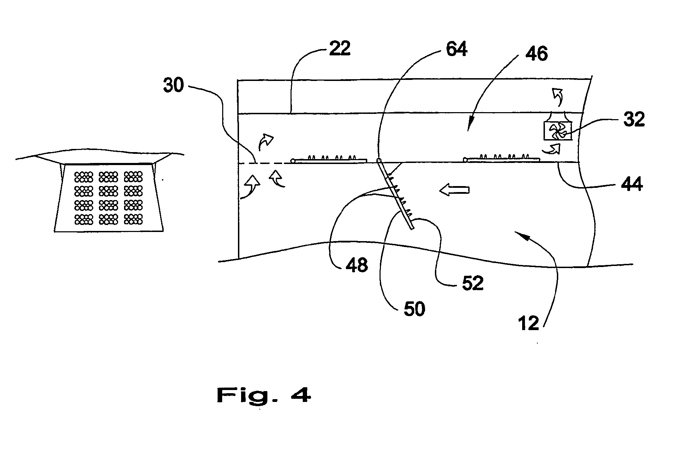

With reference to figures 1 to 4, a public transport vehicle, in this instance a coach 10 of a commuter rail vehicle, has an interior space 12 for passengers, e.g. a passenger saloon or a passenger compartment, which is delimited by a floor (not shown), a ceiling 16 and walls 18. Seats and/or other interior equipment may be attached to the floor and have not been represented here.

A central air distribution duct 20 occupies a space located between the ceiling 16 and the roof 22 of the coach 10. Exhaust ducts 24 are located on both sides of the central distribution duct 20. The air distribution duct 20 and exhaust ducts 24 extend longitudinally along the car and are part of an air distribution system, which can be a ventilation system, an air conditioning system, a heating or cooling system or any combination of the aforementioned. The air distribution duct 20 is provided with outlets 28 and may be connected to a ventilation fan (not shown). The exhaust ducts 24 are provided with one or several inlets 30 (see figure 2) and are connected by one or more suction fans 32 to the exterior of the vehicle, which means that the air flowing in the exhaust ducts 24 is not recycled to re-enter the interior space 12 of the vehicle. The air enters the interior space 12 of the vehicle via the air distribution duct 20 and the outlets 28 and is exhausted via the inlets 30 and the exhaust duct 24. Separate recycling ducts (not shown) may also be provided for recycling part of the air of the interior space of the vehicle.

The exhaust ducts 24 are provided with a top wall 40, side walls 42, and a bottom wall 44 which, in the example, is part of the ceiling 16. The bottom wall 44 is provided with large openings 46 for receiving light panels 48, one of which has been shown in figure 3. Each light panel 48 supports a plurality of lamps 50. Each lamp 50 is fitted to a back face 52 of the panel 48 and comprises one or several high power light emitting diodes (LEDs) 54 disposed in a housing 56 provided with an optical diffuser 58 located on the front face 60 of the panel 48 and facing the interior space 12 of the vehicle, and with a heat sink 62 protruding into the exhaust duct 24. The panel 48 is hinged to the bottom wall 44 of the duct or to the adjacent ceiling 16 via an articulation 64, so that its back face 52 can easily be accessed for maintenance purposes from the interior space 12 of the vehicle. The heat sinks 62 are designed so as to allow heat dissipation when exposed to the forced air flow in the duct 24. The number of lamps of the lamps 50 on each panel 48 is adapted to the luminosity, radiation characteristic and color desired.

Several electric power converters 70 are used to supply the panels 48. A single power converter 70 can power one or more panels 48. However, in a preferred embodiment, the connections between the power converters and the panels are such that two adjacent panels 48 are always powered by different power converters 70. Thus, in case of failure of a power converter 70, the zones of the vehicle that are not illuminated are small.

If for any reason a lamp 50 is overheated and generates fumes in the duct 24, passengers will not be affected because the air in the duct is not recycled but is directed outside the vehicle.

While a preferred embodiment of the invention has been described, it is to be understood by those skilled in the art that the invention is naturally not limited to this embodiment. Many variations are possible:
The fan 32 can be replaced by any other kind of air suction means or any kind of air pumping means that provides a forced air circulation out of the interior space 12 through the exhaust duct 24 to the atmosphere. The heat sinks 62 can be common to several individual lamps or LEDs. Each panel 48 can be powered by several power converters 70. The lamps 50 can be directly and individually attached to the bottom wall 44 of the duct. The bottom wall of the duct can be part of the ceiling or separated from the ceiling. The duct can also be located in a wall 18 of the interior space of the vehicle or in a luggage rack above the seats, in which case the lamps will illuminate sideward. The invention would also be applicable to other light sources than the high-power LEDs, which also necessitate cooling.

## Claims

1. A combined ventilating and illuminating arrangement for a public transport vehicle (10) having an interior space (12) for passengers, comprising:
- an air exhaust duct (24), for exhausting air from the interior space to the outside of the vehicle without recycling,
- light sources (50), arranged in panels (48), for illuminating the passenger compartment,
**characterized in that** it further comprises:
- an air pumping unit (32) for forcing air circulation through the air duct (24),
- heat sinks (62) for conducting heat from the light sources to the air exhaust duct, whereby
at least one of said panels (48) has a front face (60) facing the interior space (12) of the vehicle and a back face (52) provided with at least one of said heat sinks (62) projecting inside the air exhaust duct (24), and **in that** the at least one of said panels is hinged to the duct (48) and movable between a position of service in which the heat sinks (62) project inside the duct (24) and a position of maintenance in which the back face (52) is accessible from the interior space (12) of the vehicle.

2. The arrangement of claim 1, wherein the light sources (50) for illuminating the passenger compartment include high-power light emitting diodes (54).

3. The arrangement of claims 1 or 2, wherein each panel (48) comprises a plurality of light sources (50).

4. The arrangement of any one of the foregoing claims, wherein said panels (48) comprise at least a first panel comprising a first plurality of said light sources and a second panel adjacent to the first panel and comprising a second plurality of said light sources, the first plurality of said light sources and the second plurality of said light sources being connected to different electric power supply units (70).

5. The arrangement of any one of the foregoing claims, wherein the heat sinks (62) comprise individual heat sinks, each of said individual heat sinks for conducting heat from only one of said light sources.

6. The arrangement of any one of the foregoing claims, wherein the heat sinks comprise at least one collective heat sink for conducting heat from a plurality of said light sources.

7. The arrangement of any one of the foregoing claims, wherein the duct is mounted in the ceiling (16) of the vehicle, or to a luggage rack in the interior space of the vehicle or to a wall of the interior space of the vehicle.

8. The arrangement of any one of the foregoing claims, wherein the air pumping unit comprises a fan (32).

## Patentansprüche

1. Kombinierte Belüftungs- und Beleuchtungsanordnung für ein Personen beförderndes Fahrzeug (10) mit einem Innenraum (12) für Fahrgäste, umfassend:
- einen Luftabzugskanal (24) zum Abziehen von Luft aus dem Innenraum nach außerhalb des Fahrzeugs, ohne sie umzuwälzen,
- in Platten (48) angeordnete Lichtquellen (50) zum Beleuchten des Fahrgastraums,
**dadurch gekennzeichnet, dass** sie ferner Folgendes umfasst:
- eine Luftfördereinheit (32) zum Erzwingen der Luftzirkulation durch den Luftkanal (24),
- Kühlkörper (62) zum Ableiten von Wärme von den Lichtquellen zu dem Luftabzugskanal,
wobei wenigstens eine der Platten (48) eine Vorderseite (60) aufweist, die dem Innenraum (12) des Fahrzeugs zugekehrt ist, und eine Rückseite (52) aufweist, die mit wenigstens einem der Kühlkörper (62) versehen ist, der in das Innere des Luftabzugskanals (24) hineinragt, und dass die wenigstens eine der Platten an dem Kanal (48) angelenkt ist und zwischen einer Betriebsposition, in welcher die Kühlkörper (62) in den Kanal (24) hineinragen, und einer Wartungsposition, in welcher die Rückseite (52) vom Innenraum (12) des Fahrzeugs aus zugänglich ist, bewegt werden kann.

2. Anordnung nach Anspruch 1, bei der die Lichtquellen (50) zum Beleuchten des Fahrgastraumes lichtemittierende Hochleistungsdioden (54) einschließen.

3. Anordnung nach Anspruch 1 oder 2, bei der jede Platte (48) mehrere Lichtquellen (50) aufweist.

4. Anordnung nach einem der vorhergehenden Ansprüche, bei der die genannten Platten (48) wenigstens eine erste Platte aufweisen, die eine erste Vielzahl der Lichtquellen aufweist, und eine zweite Platte neben der ersten Platte, die eine zweite Vielzahl der Lichtquellen aufweist, wobei die erste Vielzahl der Lichtquellen und die zweite Vielzahl der Lichtquellen an verschiedene elektrische Stromversorgungseinheiten (70) angeschlossen sind.

5. Anordnung nach einem der vorhergehenden Ansprüche, bei der die Kühlkörper (62) einzelne Kühlkörper umfassen, wobei jeder der einzelnen Kühlkörper zum Ableiten von Wärme von nur einer der Lichtquellen dient.

6. Anordnung nach einem der vorhergehenden Ansprüche, bei der die Kühlkörper wenigstens einen gemeinsamen Kühlkörper zum Ableiten von Wärme von einer Vielzahl der Lichtquellen umfassen.

7. Anordnung nach einem der vorhergehenden Ansprüche, bei der der Kanal in der Decke (16) des Fahrzeugs oder an einer Gepäckablage in dem Innenraum des Fahrzeugs oder an einer Wand des Innenraums des Fahrzeugs montiert ist.

8. Anordnung nach einem der vorhergehenden Ansprüche, bei der die Luftfördereinheit ein Gebläse (32) umfasst.

## Revendications

1. Agencement combiné d'aération et d'éclairage destiné à un véhicule de transport public (10) ayant un espace intérieur (12) destiné aux passagers, comprenant :
- un tuyau d'échappement de l'air (24) destiné à rejeter l'air de l'espace intérieur vers l'extérieur du véhicule sans le recycler ;
- des sources lumineuses (50) agencées en panneaux (48) destinées à éclairer le compartiment des passagers,
**caractérisé en ce qu'**il comprend en outre :
- une unité de pompage d'air (32) destinée à forcer la circulation de l'air à travers le tuyau d'air (24),
- des dissipateurs thermiques (62) destinés à conduire la chaleur provenant des sources lumineuses vers le tuyau d'échappement, grâce à quoi :
au moins l'un desdits panneaux (48) possède une face avant (60) qui fait face à l'espace intérieur (12) du véhicule et une face arrière (52) munie d'au moins l'un desdits dissipateurs thermiques (62) faisant saillie à l'intérieur du tuyau d'échappement de l'air (24), et **en ce que** au moins l'un desdits panneaux est assemblé par une charnière au tuyau (48) et peut se déplacer entre une position de service dans laquelle les dissipateurs thermiques (62) font saillie à l'intérieur du tuyau (24) et une position d'entretien dans laquelle la face arrière (52) est accessible depuis l'espace intérieur (12) du véhicule.

2. Agencement selon la revendication 1, dans lequel les sources lumineuses (50) destinées à éclairer le compartiment réservé aux passagers incluent des diodes électroluminescentes à haute puissance (54).

3. Agencement selon les revendications 1 ou 2, dans lequel chaque panneau (48) comprend une pluralité de sources lumineuses (50).

4. Agencement selon l'une quelconque des revendications précédentes, dans lequel lesdits panneaux (48) comprennent au moins un premier panneau comprenant une première pluralité de dites sources lumineuses et un second panneau adjacent au premier panneau et comprenant une seconde pluralité de dites sources lumineuses, la première pluralité de dites sources lumineuses et la seconde pluralité de dites sources lumineuses étant connectées à différentes unités d'alimentation en courant électrique.

5. Agencement selon l'une quelconque des revendications précédentes, dans lequel les dissipateurs thermiques (62) comprennent des dissipateurs thermiques séparés, chacun desdits dissipateurs thermiques séparés étant destiné à conduire la chaleur provenant d'une seule desdites sources lumineuses.

6. Agencement selon l'une quelconque des revendications précédentes, dans lequel les dissipateurs thermiques comprennent au moins un dissipateur thermique collectif destiné à conduire la chaleur provenant d'une pluralité de dites sources lumineuses.

7. Agencement selon l'une quelconque des revendications précédentes, dans lequel le tuyau est monté dans le plafond (16) du véhicule ou sur un compartiment à bagages dans l'espace intérieur du véhicule ou sur une paroi de l'espace intérieur du véhicule.

8. Agencement selon l'une quelconque des revendications précédentes, dans lequel l'unité de pompage de l'air comprend un ventilateur (32).
